# EUROPEAN PATENT SPECIFICATION

(11) **EP 0 688 019 B1**
(45) Date of publication and mention of the grant of the patent: **20.03.2002**
(21) Application number: 95304136.5
(22) Date of filing: 15.06.1995
(51) Int. Cl.: G11B 23/087, G11B 15/08

(54) **Tape end detection mechanism for tape cassette**
Mechanismus zum Erfassen des Endes eines Bandes für Bandkassette
Mécanisme de détection de fin de bande pour cassette à bande

(30) Priority: 17.06.1994 JP 13598594
(43) Date of publication of application: 20.12.1995
(73) Proprietor: SONY CORPORATION, Tokyo 141 (JP)
(72) Inventor: Kushiro, Sunao, c/o Int. Prop. Div., Sony Corp., Tokyo 141 (JP)
(74) Representative: Boden, Keith McMurray

(56) References cited:
- CH-A- 600 479
- FR-A- 2 098 778
- GB-A- 2 259 804
- US-A- 4 886 220
- US-A- 5 121 275
- US-A- 5 222 003

## Description

The present invention relates to a tape end detection mechanism for a tape cassette.

The tape cassette may be suitable for use with a tape recorder such as a video cassette recorder (VCR).

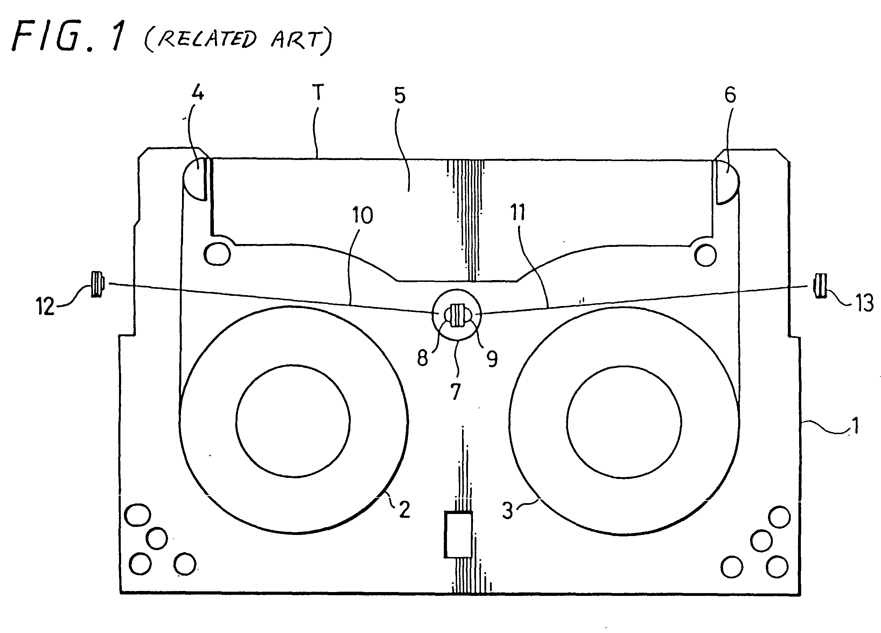

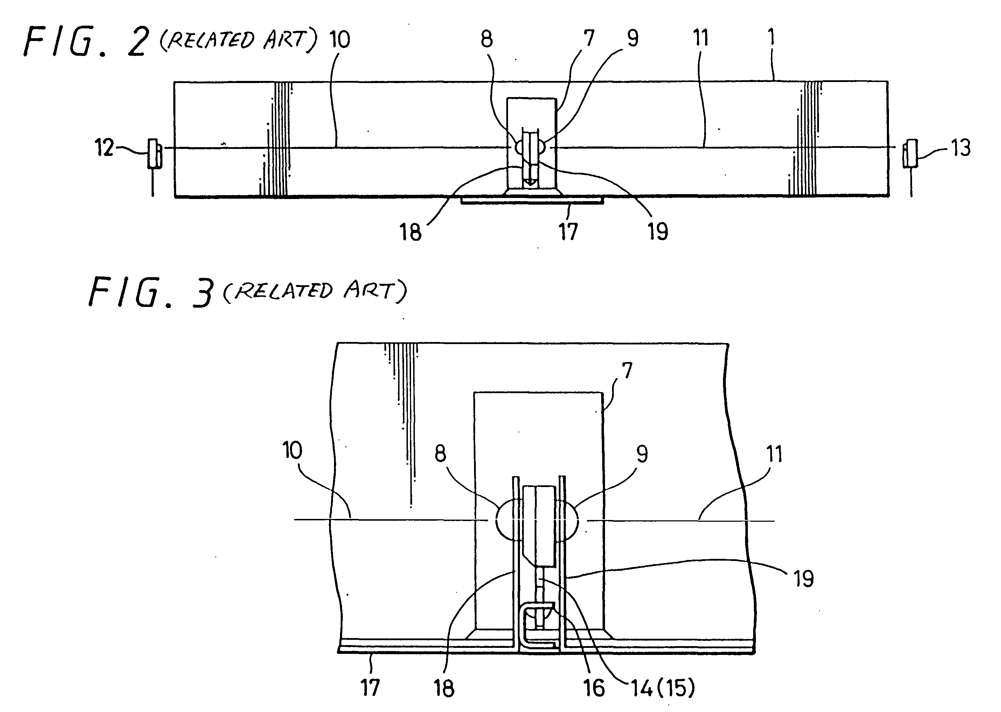

An example of a tape end detection mechanism for a tape cassette will be described with reference to Figures 1 and 2 of the accompanying drawings. Figure 1 is schematic plan and Figure 2 is a schematic view showing a tape cassette and a tape end detection mechanism, respectively.

As shown in Figure 1 and 2, there is provided a tape cassette 1 having a tape supply reel 2 and a tape takeup reel 3 therein. A tape T supplied from the tape supply reel 2 is transported over a mouth portion 5 through a tape guide 4 disposed on the tape supply reel 2 side and then wound around the tape takeup reel 3 through a tape guide 6 disposed on the tape takeup reek 3 side.

A tape detection hole 7 is bored on the mouth portion 5 side at the intermediate portion between the supply reel 2 and the takeup reel 3. Light-emitting elements 8 and 9 each formed by a light-emitting diode (LED) disposed on the mechanical deck side are provided within the tape detection hole 7. Light beams 10, 11 (light paths) emitted to the left and right directions from the light-emitting elements 8 and 9 are received by light-receiving elements 12, 13 provided on the mechanical deck side, respectively. The tape T supplied from the tape supply reel 2 crosses somewhere of one light path 10. Also, the tape T wound around the tape takeup reel 3 crosses somewhere of the other light path 11.

The tape T is composed of a recording portion with a low light transmittance and tape portions with a high light transmittance provided at respective ends of the recording portion. Owing to a difference of light transmittance between the recording portion and the tape portions, it is possible to detect respective ends (starting end and finishing end) of the tape T by optically detecting a difference of intensity of light introduced into the light-receiving elements 12, 13. The heights of the light paths of the light beams 10, 11 which are introduced into the light-receiving elements 12, 13 from the light-emitting elements 8, 9 are determined according to the format of the tape cassette.

The light-emitting elements 8, 9 are electrically connected to a flexible base 16 through conductors 14 and 15, respectively, as shown in Figure 3 in an enlarged scale. The light-emitting elements 8, 9 are supported by supporting members 18, 19 which are projected from a chassis 17 of a metal member disposed on the mechanical deck side, respectively. The flexible base 16 is shaped as a U-letter and acts as a spacer so as to prevent the conductors 14, 15 and the supporting members 18, 19 from contacting with one another.

Our US Patents Nos. 4,989,111, 5,024,394 and our Japanese Patent Application No. 05-010347 (Published specification No. 06-223554) are relevant.

While the heights of the light paths of the light beams 10, and 11 received by the light-receiving elements 12, 13 from the light-emitting elements 8, 9, are determined according to the tape cassette format, when the tape cassette is reduced in thickness so that the position of the tape detection hole 7 is lowered, the heights of the light-emitting elements 8, 9, i.e., the heights of the light paths of the light beams 10, 11 are reduced inevitably. As a consequence, the flexible base 16 and the conductors 14, 15 are projected to the lower surface side of the tape cassette 1 by a distance corresponding to the decrease of the heights of the light paths. In order words, the portions that are projected to the lower surface side of the tape cassette 1 are accommodated within the mechanical deck side so that the peripheral mechanism portions disposed within the mechanical deck have to be disposed so as not to disturb the tape cassette 1. As a result, the mechanical deck becomes thick or the mechanism portion of the mechanical deck is restricted considerably from a design standpoint.

Furthermore, if the tape detection hole 7 becomes smaller, then the tape cassette cannot be loaded on the mechanical deck with a sufficient positional freedom.

United Kingdom Specification No. 2,259,804 and French Specification No. 2,098,778 disclose similar arrangements to those shown in Figures 1 to 3. These documents describe tape detection mechanisms having a light emitting element, at least one prism and at least one light detector.

According to an aspect of the invention, there is provided a tape end detection mechanism for detecting light transmitting end portions of a tape wound around tape reels of a cassette; the mechanism comprising:
a light emitting element;
a prism for directing light from said light emitting element via a prism light emitting portion into said cassette; said prism light emitting portion being shaped to fit into a tape detection hole of said cassette; and
light detecting elements for detecting light travelling from said prism light emitting portion and through light transmitting end portions of the tape within the cassette;
characterised in that:
said prism comprises a prism body shaped to fit into a step portion of a notched configuration formed in a bottom main wall of said cassette and connected with said tape detection hole; and in that a light incident portion of said prism and said light emitting element are provided, in use, at the step portion thereby to enable said cassette to be received closely against a chassis of a tape recorder.

A further aspect of the invention provides a tape recorder comprising a tape end detection mechanism as described herein.

A yet further aspect of the invention provides a tape cassette having a substantially planar bottom main wall with a tape detection hole and a step portion of a notched configuration formed therein, said tape detection hole being connected with said step portion, the cassette being usable with the tape recorder and/or the tape end detection mechanism as described herein.

In such a tape end detection mechanism for a tape cassette a mechanism portion of a mechanical deck side can be prevented from being restricted from a design standpoint even when heights of light paths of light-emitting portions and light-receiving portions are reduced as the tape cassette becomes thin. Also in such a tape end detection mechanism for a tape cassette a tape cassette can be loaded on a mechanical deck with a sufficient positional freedom.

Thus in a tape end detection mechanism for a tape cassette in which a light beam emitted from a light-emitting portion provided at the mechanical deck side of a video cassette recorder is radiated from a tape detection hole of the tape cassette and the radiated light beam is received by light-receiving portions through a tape end of a tape to detect the tape end, the tape end detecting mechanism is arranged in a manner such that the step portion with notched configuration is provided between the bottom portion of the tape cassette and the tape detection hole, and the prism for introducing the light beam emitted from the light-emitting portion is disposed at the step portion so that light beams radiated from light radiating portions of the prism are received by the light-receiving portions, respectively.

In the tape end detection mechanism for a tape cassette according to a preferred embodiment of the present invention, the prism is formed of a light incident portion for making the light beam emitted from the light-emitting portion incident therein through the side portion of a prism, a reflection surface for reflecting the light beam incident from the light incident portion in the upper direction, and the light radiating portions for splitting the reflected light beam from the reflection surface into two light beams which travel in the opposite direction.

In the tape end detection mechanism for a tape cassette according to a preferred embodiment of the present invention, the light radiating portions of the prism are disposed within the tape detection hole.

In the tape end detection mechanism for a tape cassette according to a preferred embodiment of the present invention, the prism and the light-emitting portion are positionally fixed to each other.

In the tape end detection mechanism for a tape cassette according to a preferred embodiment of the present invention, light paths of the light beams radiated from the light-emitting portion and received by the light-receiving portions are reduced in height.

As described above, the tape end detection mechanism for a tape cassette according to the present invention is configured that the step portion of a notched configuration is provided between the bottom portion of the tape cassette and the tape detection hole, and the prism for introducing a light beam emitted from the light-emitting portion is disposed at the step portion so that light beams radiated from the light radiating portions of the prism are received by the light-receiving portions, respectively. Thus, the light-emitting portion for introducing a light beam to the prism can be disposed at an arbitrary position such that the height of the light-emitting portion is not influenced by the height of the light paths. Therefore, the light paths of the light beams radiated from the light-emitting portion and received by the light-receiving portions are reduced in height. As a consequence, a part of the tape end detection mechanism can be prevented from being projected to the mechanical deck side of the video cassette recorder. Thus, the mechanical deck can be prevented from becoming thick and also can be prevented from being restricted from a design standpoint.

Further, the prism is formed of the light incident portion for making the light beam emitted from the light-emitting portion incident therein through the side portion of the prism body, the reflection surface for reflecting the light beam incident from the light incident portion in the upper direction, and the light radiating portions for refracting and dividing the reflected light beam from the reflection surface into two light beams which travel in the opposite direction, so that the light beam emitted from the light-emitting portion can be reflected and refracted by the prism to thereby be divided into two light beams and effectively radiated as dispersed light beams.

Further, since the light-emitting portions of the prism are disposed within the tape detection hole, even when the tape detection hole is small, the positioning margin is not limited when the tape cassette is loaded on the mechanical deck.

Further, since the prism and the light-emitting portion are positionally fixed to each other, both the light-emitting portion and the light incident portion of the prism can be set with a high alignment accuracy.

Furthermore, since the heights of the light paths of the light beams radiated from the light-emitting portion and received by the light-receiving portions are reduced, the present invention can be applied to a variety of tape end detection mechanisms for a tape cassette whose thickness is reduced.

The invention is diagrammatically illustrated by way of example in the accompanying drawings, in which:
FIG. 1 is a schematic plan view of a tape-end detection mechanism and a tape cassette according to the related art;
FIG. 2 is a schematic side view of the tape end detection mechanism and the tape cassette according to the related art;
FIG. 3 is a diagram showing in detail a light-emitting portion of the tape end detection mechanism according to the related art;
FIG. 4 is a schematic plan view of a tape end detection mechanism and a tape cassette according to an embodiment of the present invention;
FIG. 5 is a perspective view of the tape cassette of FIG. 4 from the bottom side;
FIG. 6 is an exploded perspective view showing a prism and a light-emitting element of the tape end detection mechanism in an enlarged scale;
FIG. 7 is a plan view showing the assembled state of the prism and the light-emitting element;
FIG. 8 is a front view showing the assembled state of the prism and the light-emitting element;
FIG. 9 is a cross-sectional view showing the assembled state of the prism and the light-emitting element; and
FIG. 10 is a fragmentary cross-sectional view showing the state that the tape cassette is loaded onto the tape end detection mechanism.

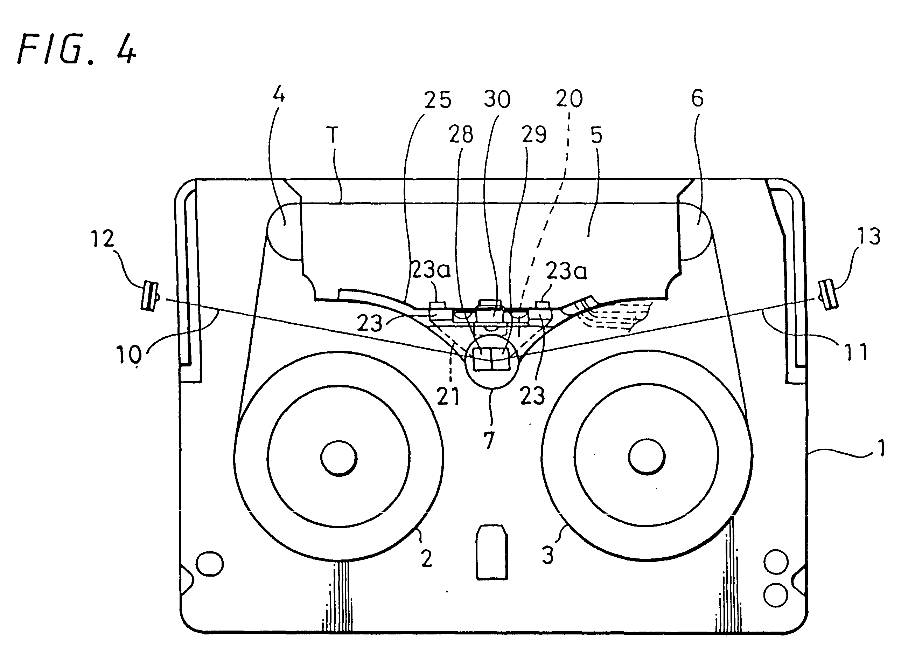

A tape end detection mechanism for a tape cassette according to an embodiment of the present invention will now be described with reference to FIGS. 4 to 10.

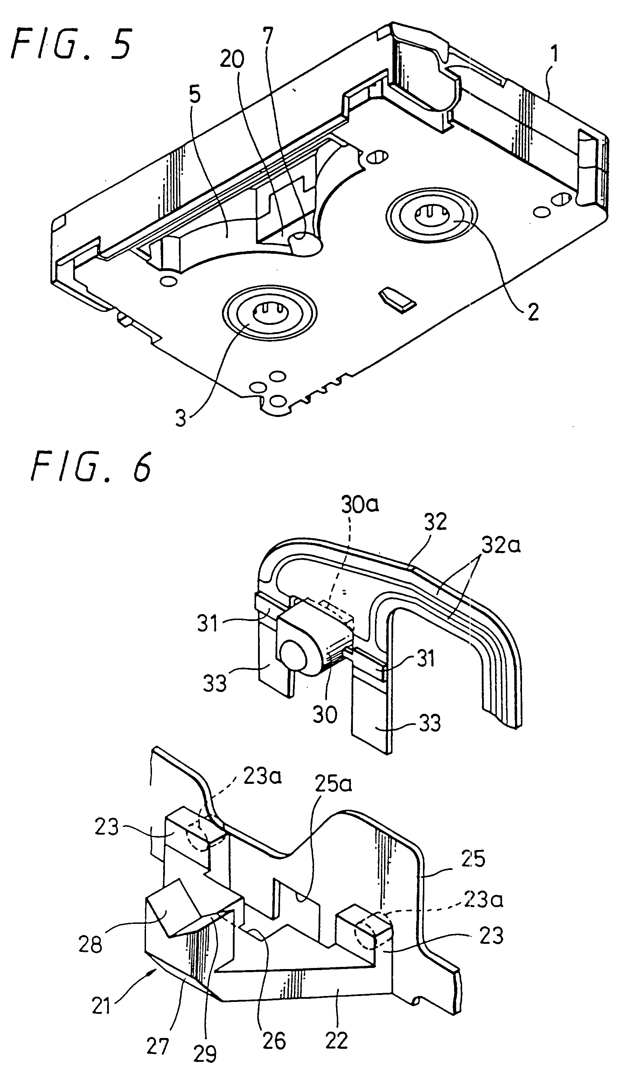

FIG. 4 is a schematic plan view showing a tape end detection mechanism and a tape cassette according to an embodiment of the present invention. FIG. 5 is a perspective view showing the tape cassette of FIG. 4 from the rear surface side. In FIGS. 4 and 5, like parts corresponding to these of FIG. 1 are marked with the same references and therefore need not be described.

Referring to FIGS. 4 and 5, the bottom portion of the side wall defining a tape detection hole 7 of the tape cassette 1 is configured to form a step portion 20 which is notched against the bottom surface of the tape cassette and faces to the mouth portion 5.

FIG. 6 is an exploded perspective view of a light-emitting portion side of the tape end detection mechanism composed of a prism 21 and a light-emitting element 30. The prism 21 is made of an acrylic resin, a glass or the like and arranged in the following manner. A prism body 22 of a triangle configuration is fixed to a metal member 25 in a manner that caulking portions 23a, 23a provided at attachment portions 23, 23 of the prism body 22 are caulked with the metal portion 25 which is projected from a chassis 24 of the mechanical deck (not shown) of the VCR. The prism body 22 has a light incident portion 26 of a concave surface configuration at the center portion of the attachment portion 23 side thereof. A reflection surface 27 formed by an inclined surface with an inclination angle of 45 degrees is provided in front of the light incident portion 26. A portion above the light reflection surface 27 is cut in a V-shaped configuration to form light radiating portions 28, 29 which opposed inclined surfaces each having the inclination angle of 45 degrees.

The mechanical deck chassis 24 and cassette loading mechanism employed in the present invention is disclosed in our Japanese Patent Application No. 05-171733 (published specification no. 07-029250).

The light-emitting element 30 formed of the LED has conductors 31, 31 at opposite side thereof which are electrically connected to conductive patterns 32a, 32a of a flexible base 32, respectively. The flexible base 32 has resilient members 33, 33.

The light-emitting element 30 is assembled in the prism 21 as follows. Initially, a convex portion 30a projected from the rear surface side of the light-emitting element 30 is fitted, from the front side of the metal member 25 of the chassis 24, into a hole 25a formed in the metal member 25 so as to be engaged therewith. In this state, each of the resilient members 33, 33 of the flexible base 32 is shaped as a U-letter configuration and then urged against the prism body 22. Thus, together with the light-emitting element 30, the flexible base 32 is pressed to the metal member 25 side under spring-biasing action of the resilient members 33, 33. As a consequence, the convex portion 30a is reliably fitted into the hole 25a of the metal member 25 and thus can be prevented from disengaged therefrom.

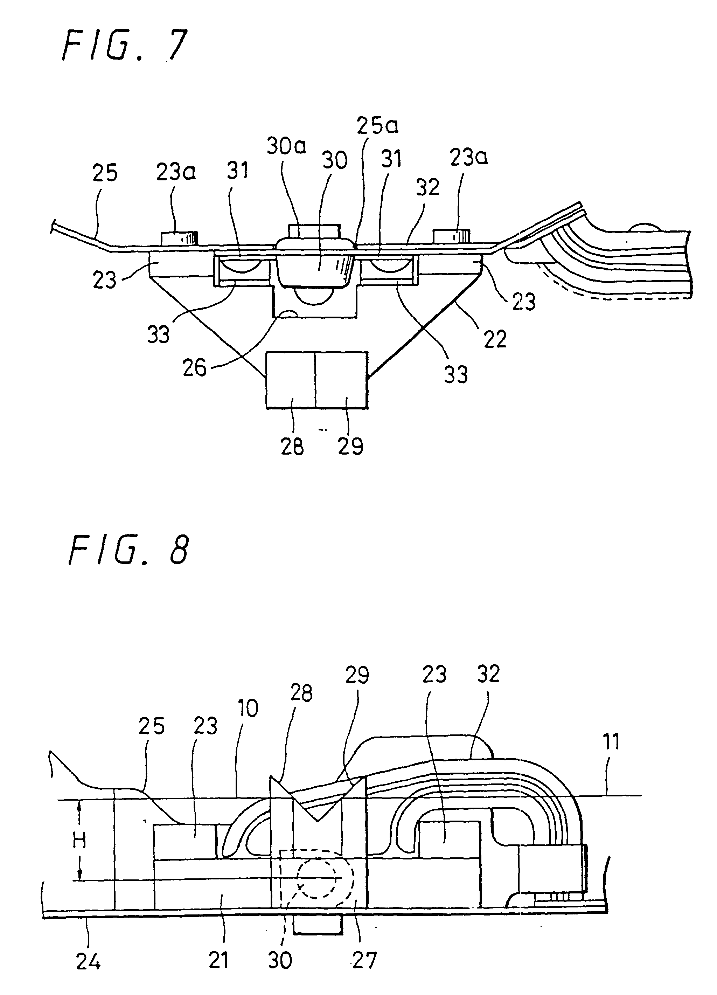

FIGS. 7, 8 and 9 show plan, front and cross-sectional side views showing the assembled state of the light-emitting element 30 and the prism 21, respectively.

According to the thus arranged tape end detection mechanism, a light beam emitted from the light-emitting element 30 is introduced into the prism body 22 through the light incident portion 26 of the prism body 22, then reflected by the reflection surface 27 to propagate to the upper direction which is at a right angle of the light incident direction. The reflected light is refracted by the light radiating portions 28, 29 at a right angle so as to be divided into two light beams which travel in the opposite direction to each other in parallel to the bottom surface of the prism body 22 and are radiated from the prism 21 to the outside.

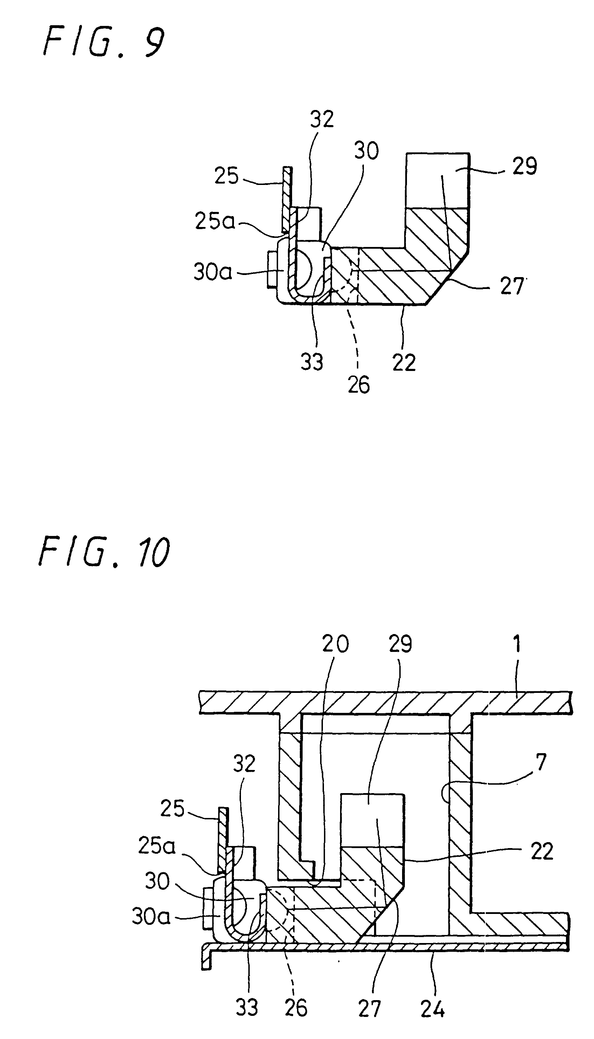

FIG. 10 is a cross-sectional view of the tape end detection mechanism according to the embodiment to which the tape cassette is mounted. As clear from FIG. 10, when the tape cassette is mounted on the tape end detection mechanism, the prism body 22 is located at the step portion 20 and the light radiating portions 28, 29 are disposed within the tape detection hole 7 of the tape cassette 1. Accordingly, the light beams divided in the opposite directions by the light radiating portions 28, 29 of the prism 21 are introduced from the tape detection hole 7 to the light-receiving elements 12, 13 through the tape T on the supply reel 2 side and the tape T on the takeup reel 3 side, respectively.

Since the light-emitting element 30 is disposed in correspondence with the light incident portion 26 provided at the side portion of the prism body 22, the height of the light-emitting element 30 is not influenced by the height of the light path. Further, since the heights of the light radiating portions 28, 29 are defined and set by a height *H* thereof from the light incident portion 26, the heights of the light beams 10, 11 can be reduced by designing the prism 21 so that the height *H* is reduced. Therefore, a part of the tape end detection mechanism can be prevented from being projected to the mechanical deck side. Thus, the mechanical deck can be prevented from becoming thick and also can be prevented from being restricted from a design standpoint.

Furthermore, since only the light radiating portions 28, 29 of the prism 21 are disposed within the tape detection hole 7, even when the tape detection hole 7 is small, the positioning margin can be prevented from being restricted when the tape cassette is loaded on the mechanical deck.

## Claims

1. A tape end detection mechanism for detecting light transmitting end portions of a tape (T) wound around tape reels (2,3) of a cassette (1); the mechanism comprising:
a light emitting element (30);
a prism (21) for directing light from said light emitting element (30) via a prism light emitting portion (28,29) into said cassette (1); said prism light emitting portion being shaped to fit into a tape detection hole (7) of said cassette (1); and
light detecting elements (12, 13) for detecting light travelling from said prism light emitting portion and through light transmitting end portions of the tape (T) within the cassette;
**characterised in that**:
said prism comprises a prism body (22) shaped to fit into a step portion (20) of a notched configuration formed in a bottom main wall of said cassette and connected with said tape detection hole (7); and **in that** a light incident portion (26) of said prism and said light emitting element (30) are provided, in use, at the step portion (20) thereby to enable said cassette to be received closely against a chassis (24) of a tape recorder.

2. A tape end detection mechanism according to claim 1, wherein said prism light incident portion (26) communicates with said light-emitting portion (28, 29) via a reflection surface (27) and said light radiating portion (28, 29) splits a reflected light beam from said reflection surface (27) into two light beams (10, 11) which travel in opposite directions.

3. A tape end detection mechanism according to claim 1 or claim 2, wherein said light-emitting element (30) and said prism (21) are positionally fixed with respect to each other.

4. Atape end detection mechanism according to any of claims 1 to 3 wherein light paths of light beams radiated from said light-emitting portion (28,29) and received by said light-receiving portions (12,13) are reduced in height.

5. A tape end detection mechanism according to any of claims 1 to 4 wherein said light incident portion (26) and said light radiating portion (28, 29) are positioned so that a light beam incident in said light incident portion and a light beam radiated from said light radiating portion are at a right angle to each other.

6. A tape end detection mechanism according to any of claims 2 to 5 when dependent on claim 2, wherein the light beam incident on said light incident portion (26) and the reflected light beam reflected by said reflection surface (27) are at a right angle to each other.

7. A tape end detection mechanism according to any preceding claim, wherein said step portion (20) has a substantially triangular shape, and said prism body (22) has substantially the same shape as that of said step portion (20).

8. A tape recorder comprising a tape end detection mechanism according to any preceding claim.

9. A tape cassette (1) having a substantially planar bottom main wall with a tape detection hole (7) and a step portion (20) of a notched configuration formed therein, said tape detection hole being connected with said step portion (20), said cassette being usable with the tape recorder of Claim 8 and/or the tape end detection mechanism of any of claims 1 to 7.

## Patentansprüche

1. Bandende-Erfassungsmechanismus zum Erfassen von lichtdurchlässigen Endabschnitten eines um Bandspulen (2, 3) einer Kassette (1) gewickelten Bandes (T), wobei der Mechanismus aufweist:
ein lichtemittierendes Element (30);
ein Prisma (21) zum Richten von Licht von dem lichtemittierenden Element (30) über einen lichtemittierenden Prismenabschnitt (28, 29) in die Kassette (1), wobei der lichtemittierende Prismenabschnitt passend für ein Banderfassungsloch (7) der Kassette (1) geformt ist; und
Lichterfassungselemente (12, 13) zum Erfassen von Licht, das in der Kassette von dem lichtemittierenden Prismenabschnitt und durch die lichtdurchlässigen Endabschnitte des Bandes (T) läuft,
**dadurch gekennzeichnet,**
**dass** das Prisma einen Prismenkörper (22) aufweist, der passend für einen Stufenabschnitt (20) einer in einer Bodenhauptwand der Kassette ausgebildeten und mit dem Banderfassungsloch (7) verbundenen Kerbanordnung geformt ist; und dass ein Lichteinfallsabschnitt (26) des Prismas und das lichtemittierende Element (30) bei Gebrauch bei dem Stufenabschnitt (20) vorgesehen sind, wodurch es ermöglicht wird, dass die Kassette eng gegen ein Gehäuse (24) eines Bandrecorders aufgenommen wird.

2. Bandende-Erfassungsmechanismus nach Anspruch 1,
**dadurch gekennzeichnet,**
**dass** der Lichteinfallsabschnitt (26) des Prismas mit dem lichtemittierenden Abschnitt (28, 29) über eine Reflexionsfläche (27) in Verbindung steht; und dass der lichtaussendende Abschnitt (28, 29) einen von der Reflexionsfläche (27) reflektierten Lichtstrahl in zwei Lichtstrahlen (10, 11) aufspaltet, die in entgegengesetzte Richtungen laufen.

3. Bandende-Erfassungsmechanismus nach Anspruch 1 oder 2,
**dadurch gekennzeichnet,**
**dass** das lichtemittierende Element (30) und das Prisma (21) relativ zueinander fest positioniert sind.

4. Bandende-Erfassungsmechanismus nach einem der Ansprüche 1 bis 3,
**dadurch gekennzeichnet,**
**dass** Lichtpfade von Lichtstrahlen, die von dem lichtemittierenden Abschnitt (28, 29) ausgesendet und durch die Lichtempfangsabschnitte (12, 13) empfangen werden, in ihrer Höhe verringert sind.

5. Bandende-Erfassungsmechanismus nach einem der Ansprüche 1 bis 4,
**dadurch gekennzeichnet,**
**dass** der Lichteinfallsabschnitt (26) und der lichtaussendende Abschnitt (28, 29) derart angeordnet sind, dass ein in den Lichteinfallsabschnitt einfallender Lichtstrahl und ein von dem lichtaussendenden Abschnitt ausgesendeter Lichtstrahl in einem rechten Winkel zueinander stehen.

6. Bandende-Erfassungsmechanismus nach einem der Ansprüche 2 bis 5, abhängig von Anspruch 2,
**dadurch gekennzeichnet,**
**dass** der auf den Lichteinfallsabschnitt (26) einfallende Lichtstrahl und der durch die Reflexionsfläche (27) reflektierte Lichtstrahl in einem rechten Winkel zueinander stehen.

7. Bandende-Erfassungsmechanismus nach einem der vorhergehenden Ansprüche,
**dadurch gekennzeichnet,**
**dass** der Stufenabschnitt (20) eine im wesentlichen dreieckige Form aufweist, und dass der Prismenkörper (22) im wesentlichen die gleiche Form wie der Stufenabschnitt (20) besitzt.

8. Bandrecorder mit einem Bandende-Erfassungsmechanismus nach einem der vorhergehenden Ansprüche.

9. Bandkassette (1) mit einer im wesentlichen ebenen Bodenhauptwand mit einem darin ausgebildeten Banderfassungsloch (7) und einem darin ausgebildeten Stufenabschnitt (20) einer Kerbanordnung, wobei das Banderfassungsloch mit dem Stufenabschnitt (20) verbunden ist, und wobei die Kassette mit dem Bandrecorder von Anspruch 8 und/oder dem Bandende-Erfassungsmechanismus nach einem der Ansprüche 1 bis 7 verwendbar ist.

## Revendications

1. Mécanisme de détection de fin de bande destiné à détecter des parties finales de transmission de lumière d'une bande (T) enroulée sur des bobines (2, 3) de bande d'une cassette (1), le mécanisme comprenant :
un élément photoémissif (30),
un prisme (21) destiné à diriger la lumière provenant de l'élément photoémissif (30) par l'intermédiaire d'une partie (28, 29) d'émission de lumière du prisme dans la cassette (1), la partie d'émission de lumière du prisme ayant une forme telle qu'elle peut se loger dans un trou (7) de détection de bande de la cassette (1), et
des éléments photodétecteurs (12, 13) destinés à détecter la lumière qui se déplace depuis la partie d'émission de lumière du prisme et à travers les parties transparentes de fin de la bande (T) placée dans la cassette,
**caractérisé en ce que**
le prisme comporte un corps (22) de prisme dont la forme permet le logement dans une partie de gradin (20) de configuration à encoche formée dans une paroi principale inférieure de la cassette et reliée au trou (7) de détection de bande, et **en ce qu'**une partie (26) d'incidence de lumière du prisme et l'élément photoémissif (30) sont disposés, pendant l'utilisation, au niveau de la partie de gradin (20) afin que la cassette puisse être logée intimement contre un châssis (24) d'un appareil d'enregistrement sur bande.

2. Mécanisme de détection de fin de bande selon la revendication 1, dans lequel la partie (26) d'incidence de lumière du prisme communique avec la partie d'émission de lumière (28, 29) par l'intermédiaire d'une surface réfléchissante (27), et la partie de rayonnement de lumière (28, 29) divise un faisceau lumineux réfléchi provenant de la surface réfléchissante (27) en deux faisceaux lumineux (10, 11) qui se déplacent en sens opposés.

3. Mécanisme de détection de fin de bande selon la revendication 1 ou 2, dans lequel l'élément photoémissif (30) et le prisme (21) ont des positions fixes l'un par rapport à l'autre.

4. Mécanisme de détection de fin de bande selon l'une quelconque des revendications 1 à 3, dans lequel les trajets des faisceaux lumineux provenant de la partie d'émission de lumière (28, 29) et reçus par la partie photoréceptrice (12, 13) ont une hauteur réduite.

5. Mécanisme de détection de fin de bande selon l'une quelconque des revendications 1 à 4, dans lequel la partie (26) d'incidence de lumière et la partie (28, 29) de rayonnement de lumière sont disposées afin qu'un faisceau lumineux tombant sur la partie d'incidence de lumière et un faisceau lumineux provenant de la partie de rayonnement de lumière soient perpendiculaires l'un à l'autre.

6. Mécanisme de détection de fin de bande selon l'une quelconque des revendications 2 à 5 lorsqu'elle dépend de la revendication 2, dans lequel le faisceau lumineux tombant sur la partie d'incidence de lumière (26) et le faisceau lumineux réfléchi par la surface réfléchissante (27) sont. perpendiculaires l'un à l'autre.

7. Mécanisme de détection de fin de bande selon l'une quelconque des revendications précédentes, dans lequel la partie de gradin (20) a une forme pratiquement triangulaire, et le corps de prisme (22) a pratiquement la même forme que la partie de gradin (20).

8. Appareil d'enregistrement sur bande comprenant un mécanisme de détection de fin de bande selon l'une quelconque des revendications précédentes.

9. Cassette de bande (1) ayant une paroi principale inférieure pratiquement plane qui a un trou (7) de détection de bande et une partie de gradin (20) ayant une configuration à encoche, le trou de détection de bande étant relié à ladite partie de gradin (20), la cassette étant destinée à être utilisée avec l'appareil d'enregistrement sur bande de la revendication 8 et/ou le mécanisme de détection de fin de bande de l'une quelconque des revendications 1 à 7.
